(19) Europäisches Patentamt / European Patent Office / Office européen des brevets

(11) **EP 2 947 888 B1**

(12) **FASCICULE DE BREVET EUROPEEN**

(45) Date de publication et mention de la délivrance du brevet:
**04.08.2021 Bulletin 2021/31**

(51) Int Cl.:
*H04N 21/2343* *(2011.01)*   *H04N 21/24* *(2011.01)*
*H04N 21/442* *(2011.01)*

(21) Numéro de dépôt: **15168343.0**

(22) Date de dépôt: **20.05.2015**

(54) **PROCÉDÉ DE TÉLÉCHARGEMENT ADAPTATIF DE CONTENUS NUMÉRIQUES POUR PLUSIEURS ÉCRANS**

VERFAHREN ZUM ADAPTIVEN HERUNTERLADEN VON DIGITALEN INHALTEN FÜR MEHRERE BILDSCHIRME

ADAPTIVE METHOD FOR DOWNLOADING DIGITAL CONTENT FOR A PLURALITY OF SCREENS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **22.05.2014 FR 1454635**

(43) Date de publication de la demande:
**25.11.2015 Bulletin 2015/48**

(73) Titulaire: **ORANGE**
**92130 Issy-les-Moulineaux (FR)**

(72) Inventeurs:
• **Marchand, Michel**
  **35770 VERN SUR SEICHE (FR)**
• **Bouvet, Eric**
  **35520 MONTREUIL LE GAST (FR)**

(56) Documents cités:
**WO-A2-2011/159104     US-A1- 2006 222 008**
**US-A1- 2011 161 485     US-A1- 2014 068 789**

• **None**

EP 2 947 888 B1

**Description**

Domaine technique

L'invention se rapporte aux communications de contenus multimédia numériques, notamment sous forme de chaînes de contenus.

L'invention a trait à un procédé de téléchargement adaptatif de contenus numériques pour plusieurs écrans.

On entend par contenu multimédia tout contenu audio ou vidéo, ou plus généralement tout autre contenu numérique, ci-après désigné par contenu numérique. On entend par chaîne de contenus multimédia, ou chaîne de télévision, une succession de tels contenus dans le temps.

L'invention s'applique à la consommation de tels contenus par un terminal, équipé d'un écran, connecté à un réseau de type Internet. Par consommation, on entend ici un traitement réalisé en vue d'une restitution s'effectuant sur un terminal. Le traitement peut notamment inclure un décodage du contenu numérique. La consommation s'entend généralement par l'affichage sur un écran d'un tel terminal ou la restitution sonore.

Elle a trait, en particulier, à un procédé de gestion de l'acquisition de contenus numériques par un ou plusieurs terminaux aptes à recevoir et traiter simultanément plusieurs contenus depuis un réseau, et en particulier à l'adaptation du débit de chacun des contenus.

Etat de la technique

L'accès à un contenu multimédia, tel que la télévision, depuis un réseau de type Internet, est possible aujourd'hui. La télévision sur Internet permet à un utilisateur d'un terminal, connecté à un serveur de chaînes de contenus de télévision via un réseau de télécommunication, de rendre, ou restituer, une chaîne numérique de son choix parmi une liste prédéterminée de chaînes possibles.

Le terminal émet généralement une requête à destination d'un serveur, en indiquant la chaîne choisie et il reçoit en retour un flux de données numériques relatives à cette chaîne.

Une chaîne numérique comprend typiquement des films, des vidéos, ou de manière plus générale tout type de contenu numérique qui peut être transmis dans le réseau considéré.

Le terminal est adapté pour recevoir ces contenus numériques sous forme de données multimédia et pour en faire une restitution. Cette restitution consiste à fournir au niveau du terminal le contenu numérique sous une forme accessible à l'utilisateur. Par exemple, des données reçues correspondant à une vidéo sont généralement décodées, puis restituées au niveau du terminal sous la forme d'un affichage, ou visualisation, de la vidéo correspondante avec sa bande-son associée. Dans la suite, on assimilera le contenu numérique à une vidéo et la restitution par le terminal, ou consommation par l'utilisateur du terminal, à une visualisation sur l'écran du terminal.

La diffusion de chaînes de contenus numériques sur Internet est souvent basée sur des protocoles client-serveur de la famille HTTP (de l'anglais *Hyper Text Transport Protocol*). En particulier, le téléchargement en mode progressif des contenus numériques, aussi appelé *streaming,* permet de transporter et consommer les données en temps réel, c'est-à-dire que les données numériques sont transmises sur le réseau et restituées par le terminal au fur et à mesure de leur arrivée. Le terminal reçoit typiquement une partie des données numériques dans une mémoire tampon avant de les restituer. Ce mode de distribution est particulièrement utile quand le débit dont dispose l'utilisateur n'est pas garanti pour le transfert en temps réel de la vidéo.

Le téléchargement progressif adaptatif, en anglais *HTTP Adaptative Streaming,* d'abréviation HAS, permet de surcroît de diffuser et recevoir des données suivant différentes qualités correspondant par exemple à différents débits. Ces différentes qualités sont décrites dans un fichier de paramètres disponible en téléchargement sur un serveur de données, par exemple un serveur de chaînes de contenus. Quand le terminal client souhaite accéder à une chaîne de contenus, ce fichier de description permet de sélectionner le bon format pour le contenu à consommer en fonction de la bande passante disponible, des capacités de stockage et de décodage du terminal client ou encore de la taille de son écran. Ce type de technique permet notamment de tenir compte des variations de bande passante sur la liaison entre le terminal client et le serveur de chaînes de contenus.

Il existe plusieurs solutions techniques pour faciliter la distribution d'un tel contenu en *streaming,* comme par exemple les solutions propriétaires Microsoft *Smooth Streaming,* Apple *HLS,* Adobe *Http Dynamic Streaming* ou encore la norme MPEG-DASH de l'organisme ISO/IEC qui sera décrite ci-après. Ces méthodes proposent d'adresser au client un ou plusieurs fichiers de description intermédiaires, appelés aussi documents ou manifestes, contenant les adresses des différents segments aux différentes qualités du contenu multimédia.

Si un deuxième téléchargement progressif est lancé en parallèle d'un premier, par exemple par le même terminal, ou par un autre terminal du même réseau local, la bande passante totale disponible pour le téléchargement est divisée à parts égales entre les deux flux téléchargés. De même, le téléchargement simultané de plus de deux flux amènera une division à parts égales de manière à ce que chacun des flux dispose de la même bande passante. En effet, le protocole HTTP est basé sur des principes d'égalité d'accès à une ressource. Le protocole HTTP est en particulier basé sur des protocoles de type TCP-IP (ensemble des protocoles utilisés pour le transfert des données sur Internet) qui permet de véhiculer les paquets de données entre les différents terminaux et serveurs et la passerelle de service. La passerelle de service qui reçoit les paquets de données acheminés selon TCP-IP ne leur affecte pas de priorité, ce qui aboutit à un partage égalitaire de la bande passante. En particulier, si deux téléchargements sont lancés en parallèle par le même terminal, le même algorithme de sélection de la qualité du contenu en fonction de la bande passante disponible est utilisé, aboutissant à un partage en deux parties égales de la bande passante disponible.

Cependant, plusieurs flux de données vidéo téléchargés et destinés à être restitués sur un même écran ne nécessitent pas forcément, d'un point de vue de l'utilisateur, le même débit. Par exemple, certaines techniques d'incrustation vidéo (en anglais, *PictureInPicture*, d'abréviation PIP) permettent généralement d'afficher dans une petite fenêtre une deuxième vidéo à l'écran. Il est souhaitable, dans ce contexte, que l'utilisateur puisse affecter un débit plus important à la vidéo principale, au détriment de la vidéo incrustée. Le problème s'étend à un nombre supérieur de vidéos simultanément affichées à l'écran ou sur plusieurs dispositifs de restitution du réseau local.

Selon certaines implémentations, il est connu d'adapter la capture du contenu à certains paramètres choisis par l'utilisateur : par exemple, une chaîne donnée est encodée, décodée, et donc restituée dans une qualité variable selon certains paramètres choisis par l'utilisateur. Par exemple, le brevet US2007/0024705 (*Systems and methods for video stream selection*) décrit un tel mécanisme dans le contexte d'une mosaïque de contenus pour laquelle le débit d'encodage d'un contenu donné est rendu proportionnel à la taille occupée par la fenêtre de restitution du contenu dans la mosaïque.

Dans ce type d'implémentation, cependant, c'est la capture de la vidéo qui est conditionnée par la taille de la fenêtre dans la mosaïque. Une modification de la taille de cette fenêtre peut être suivie d'un temps assez long pour modifier le débit du contenu à acheminer. De plus, il impose une modification des conditions d'acquisition physiques (capture et compression vidéo, audio, etc.) du contenu numérique à la source.

Il n'existe pas, à ce jour, de solution pour partager intelligemment le débit entre plusieurs flux téléchargés progressivement de manière adaptative (HAS) et restitués sur des terminaux du réseau local avec des caractéristiques de restitution différentes, sans imposer une modification de l'acquisition du contenu.

L'invention offre une solution ne présentant pas les inconvénients de l'état de la technique.

L'invention

L'invention est décrite dans les revendications annexées à cette description.

Les figures:

La figure 1 représente une architecture de téléchargement progressif sur Internet basée sur l'utilisation du *streaming* adaptatif selon l'invention.

La figure 2 représente une architecture d'une passerelle de service implémentant un mode de réalisation de l'invention.

La figure 3 représente un chronogramme selon un mode de réalisation de l'invention.

La figure 4 représente un organigramme de calcul pour un mode de réalisation de gestion optimisée du téléchargement selon l'invention.

Description détaillée d'un exemple de réalisation illustrant l'invention

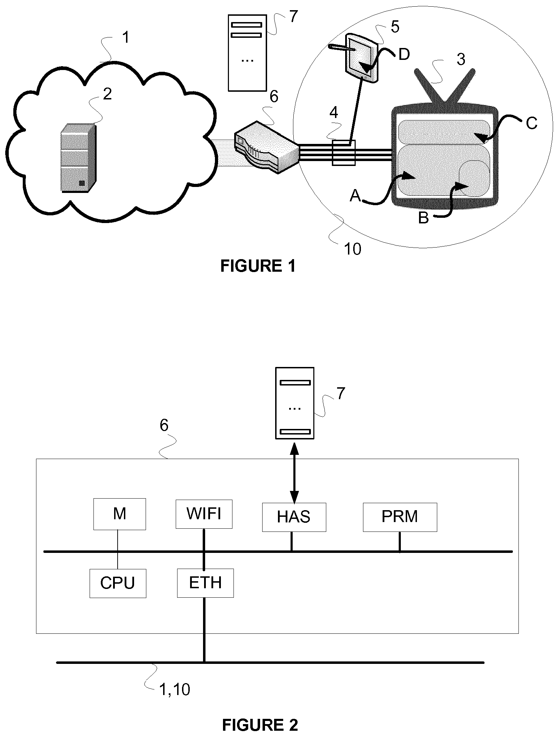

La figure 1 représente une architecture de téléchargement progressif basée sur l'utilisation du *streaming* adaptatif selon l'invention.

Le terminal 3, par exemple un PC ou un téléviseur connecté, et le terminal 5, par exemple une tablette numérique, se trouvent dans cet exemple situé dans un réseau local (LAN, 10) piloté par une passerelle domestique (6). Le contexte du réseau local est donné à titre d'exemple et pourrait être transposé aisément à un réseau Internet de type « best effort », un réseau d'entreprise, etc.

Un serveur de contenus numériques (2) se trouve selon cet exemple dans le réseau étendu (WAN, 1) mais il pourrait indifféremment être situé dans le réseau local (LAN, 10), par exemple dans la passerelle domestique (6) ou tout autre équipement capable d'héberger un tel serveur de contenus. Le serveur de contenus (2) reçoit par exemple des chaînes de contenus de télévision numérique en provenance d'un réseau de télévision diffusée, non représenté, et les met à disposition des terminaux clients. Selon un autre exemple, le serveur de contenu (2) prépare lui-même ses contenus et les assemble sous forme de chaînes de contenus de télévision avant de les stocker par exemple sur un disque dur.

Classiquement, au moins l'un des terminaux client (3, 5), souhaite entrer en communication avec le serveur de contenu (2) pour recevoir une chaîne de contenus composée d'un ou plusieurs contenus (films, documentaires, séquences publicitaires, etc.) séquentiels dans le temps. L'ensemble des données descriptives de ces programmes s'appelle un guide de programmes, proposé à l'utilisateur du terminal (3,5) pour l'aider dans son choix.

Il est fréquent, dans ce contexte client-serveur, de recourir, pour échanger les données entre le terminal client (3,5) et le serveur (2), à une technique de téléchargement progressif adaptatif, en anglais « *adaptive streaming* », abrégé en HAS basée sur le protocole HTTP. Ce type de technique permet notamment d'offrir une bonne qualité de contenus à l'utilisateur en tenant compte des variations de bande passante qui peuvent se produire sur la liaison entre le terminal client (3,5) et la passerelle de services (6), ou entre cette dernière et le serveur de contenu (2).

Classiquement, différentes qualités peuvent être encodées pour le même contenu d'une chaîne, correspondant par exemple à différents débits. Plus généralement, on parlera de *qualité* pour se référer à une certaine résolution du contenu numérique (résolution spatiale, temporelle, niveau de qualité associée à la compression vidéo et/ou audio) avec un certain débit. Chaque niveau de qualité est lui-même découpé sur le serveur de contenu en segments temporels (ou « fragments » de contenu).

La description de ces différentes qualités et de la segmentation temporelle associée, ainsi que les fragments de contenu, sont décrits pour le terminal client et mis à sa disposition via leurs adresses Internet (URI : Universal Ressource Identifier). L'ensemble de ces paramètres (qualités, adresses des fragments, etc.) est en général regroupé dans un fichier de paramètres, dit fichier de description. On notera que ce fichier de paramètres peut être un fichier informatique ou un ensemble d'informations descriptives du contenu, accessible à une certaine adresse.

Le terminal (3,5) possède ses propres caractéristiques en termes de capacité de décodage, d'affichage, etc. Dans un contexte de téléchargement adaptatif progressif, il peut adapter ses requêtes pour recevoir et décoder la chaîne de contenus de télévision demandée par l'utilisateur à la qualité qui lui correspond au mieux. Dans notre exemple, si les chaînes de contenus de télévision sont disponibles aux débits 512Kb/s (kilobits par seconde) (Résolution 1, ou niveau 1, noté N1), 1024kb/s (N2), 2048kb/s (N3) et que le terminal client dispose d'une bande passante de 3000kb/s, il peut demander le contenu à n'importe quel débit inférieur à cette limite, par exemple 2048kb/s. De manière générale, on note « Ci@Nj » la chaîne numéro i (il s'agit par exemple de l'indice de la *ieme* chaîne dans le plan de service d'un bouquet numérique d'un opérateur) avec la qualité j (par exemple le *j-ieme* niveau Nj de qualité décrit dans le fichier de description).

La passerelle de service (6) est dans cet exemple une passerelle domestique qui assure le routage des données entre le réseau étendu (1) et le réseau local (10), gère les chaînes de contenus numériques en assurant notamment leur réception en provenance du réseau et leur décodage grâce aux décodeurs que l'on suppose ici intégrés à la passerelle (6) ou au terminal (3,5). En variante, les décodeurs peuvent se trouver ailleurs dans le réseau étendu (1) ou local (10), notamment au niveau d'un élément de type STB (de l'anglais *Set-Top-Box*) associé au téléviseur (3).

Dans cet exemple, pour visualiser un contenu, le terminal (3,5) interroge tout d'abord la passerelle de service (6) pour obtenir une adresse du document de description (7) de la chaîne de contenu (par exemple, C1) souhaité. La passerelle de service (6) répond en fournissant au terminal l'adresse du fichier de description (7). Dans la suite, on supposera que ce fichier est un fichier de type *manifest* selon la norme MPEG-DASH (noté « C.mpd ») et on se référera indifféremment, selon le contexte, à l'expression « fichier de description » ou « manifest».

Alternativement, ce fichier peut être récupéré directement auprès d'un serveur Internet local ou externe au réseau local, ou se trouver déjà sur la passerelle de service ou sur le terminal au moment de la requête.

Un exemple de fichier *manifest* (MPD) conforme à la norme MPEG-DASH et comportant la description de contenus disponibles dans trois qualités différentes (N1 = 512kb/s, N2 = 1024 kb/s, N3 = 2048 kb/s) des contenus fragmentés est présenté en annexe 1. Ce fichier *manifest* simplifié décrit des contenus numériques dans une syntaxe XML (de l'Anglais « eXtended Markup Language»), comprenant une liste de contenus sous forme de fragments classiquement décrits entre une balise ouvrante (<SegmentList>) et une balise fermante (</SegmentList>). La découpe en fragments permet notamment de s'adapter finement aux fluctuations de la bande passante. Chaque fragment correspond à une certaine durée (champ « duration ») avec plusieurs niveaux de qualité et permet de générer leurs adresses (URL - *Uniform Resource Locator*). Cette génération est faite dans cet exemple à l'aide des éléments « BaseURL » (« HTTP://server.com») qui indique l'adresse du serveur de contenu et « SegmentURL » qui liste les parties complémentaires des adresses des différents fragments :

- « C1_512kb_1.mp4» pour le premier fragment du contenu « C1 » à 512 kilobits par seconde (« kb ») au format MPEG-4 (« mp4 »),
- « C1_512kb_2.mp4» pour le second fragment,

- etc.

Une fois qu'elle dispose des adresses de fragments correspondant au contenu souhaité, la passerelle de service (6) procède à l'obtention des fragments de média via un téléchargement à ces adresses. On notera que ce téléchargement s'opère ici, traditionnellement, au travers d'une URL HTTP, mais pourrait également s'opérer au travers d'une adresse universelle (URI) décrivant un autre protocole (*dvb://monsegmentdecontenu* par exemple).

On suppose ici que le terminal (3) restitue trois contenus (C1, C2, C3) décrits dans le fichier *manifest* (7) et restitués sur trois zones du téléviseur (A, B et C).

- La zone A est une zone rectangulaire occupant les trois-quarts inférieurs de l'écran ;
- La zone C est une autre zone rectangulaire occupant le quart supérieur de l'écran;
- La zone B est une petite zone carrée incrustée dans la zone A afin de représenter un programme en PIP (Picture In Picture), correspondant à une surface de 15% de l'écran.

Ainsi donc, globalement, la fenêtre 1 occupe 60% de l'écran, la fenêtre B en occupe 15% et la fenêtre C, 25%.

On suppose aussi que le terminal (5) restitue un contenu (C4) qui occupe la totalité de l'écran (fenêtre D) du terminal (5).

Selon l'état de l'art, la stratégie habituellement privilégiée est d'acheminer les quatre flux selon un débit égal, indépendamment de leur occupation sur les écrans.

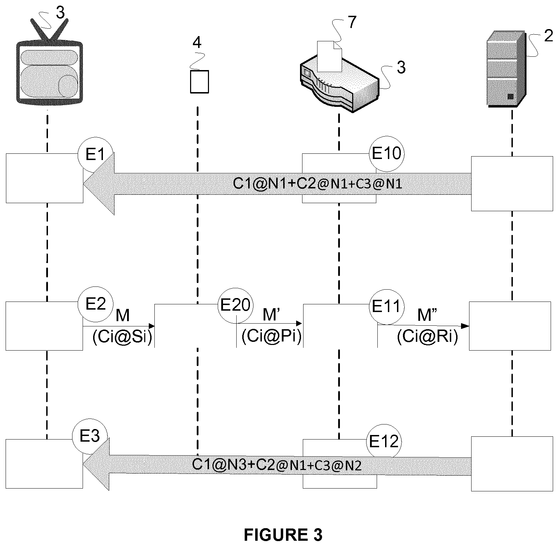

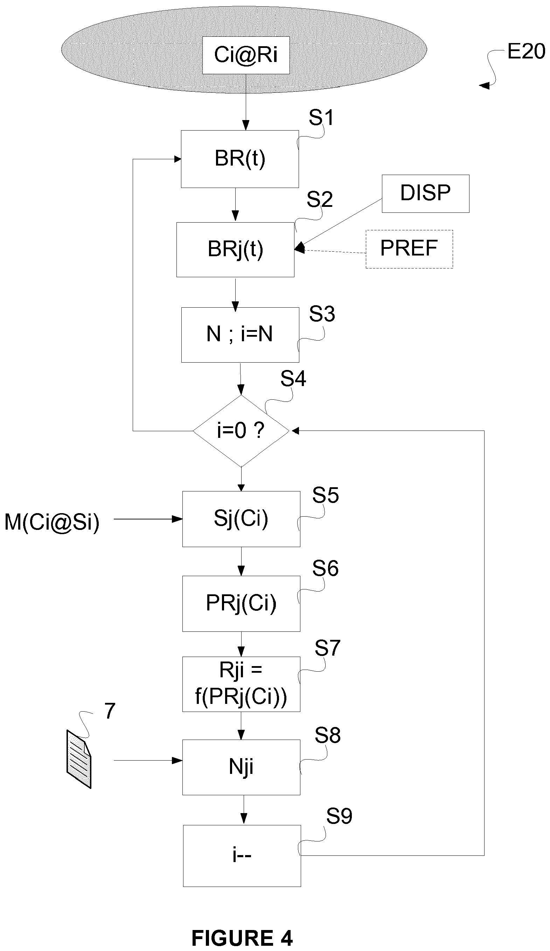

Le but du dispositif de gestion de téléchargement (4) selon l'invention, qui sera décrit ultérieurement plus en détails à l'appui des figures 3 et 4, est de répartir intelligemment les débits selon les tailles des différentes fenêtres, ou nombre de pixels, associés aux différents contenus sur les différents terminaux. Ce dispositif peut être situé dans le poste client, mais fonctionne dans ce cas pour un seul terminal client, ou dans la passerelle domestique (6) et peut s'appliquer dans ce cas à plusieurs terminaux clients qui lui sont raccordés. Il peut encore être situé sur un autre terminal du réseau local (LAN, 10) ou même sur un serveur dans le réseau étendu (WAN,1) mais il faut dans ce cas que le serveur ait la possibilité de récupérer les informations du réseau local.

Sur la figure 1, ce dispositif (4) est représenté sur le lien entre la passerelle domestique et le terminal (3,5).

On suppose que le téléviseur (3) est désigné dans les préférences de l'utilisateur avec un coefficient préférentiel de 4 alors que pour la tablette ce coefficient est de 1. Le débit total étant connu (il peut être acquis ou calculé selon divers procédés à la portée de l'homme du métier, qui seront proposés dans la suite de la description), le procédé selon l'invention calcule chacun des débits pour chacun des terminaux.

Si le débit total disponible (soit sur le réseau local, soit à l'entrée de la passerelle) est de 5 Mégaoctets par seconde (5Mo) on pourra affecter selon cet exemple 4Mo (4096ko) au terminal 3 (coefficient préférentiel d'une valeur 4) et 1Mo au terminal 5.

Puis, pour le terminal 3, le procédé va tenter d'affecter 60% du débit au contenu C1, 15% à C2 et 25% à C3, conformément à la surface qu'ils occupent à l'écran. On pourra donc affecter 2048kb à C1 (50% des 4Mo de débit total disponible pour le terminal), 1024kb à C3 (25%), et 512kb à C2 (12,5%).

Pour le terminal 5, le procédé va affecter 100% du débit total disponible pour le terminal au contenu C4, c'est à dire 1024kb.

On remarquera qu'une partie de la bande passante totale disponible de 4Mo du terminal client 3 est dans ce cas inutilisée : les trois contenus cumulant un débit total de 3,5Mb, il reste un certain débit disponible (512Kb), qui peut être utilisé par exemple pour pré-acheminer un certain nombre de chaînes de contenus, c'est-à-dire les faire parvenir jusqu'à la passerelle, ou jusqu'au terminal, de l'utilisateur, en vue de leur restitution future.

La figure 2 représente une architecture d'une passerelle de service (6) implémentant un mode de réalisation de l'invention.

Elle comprend, classiquement, des mémoires (M) associées à un processeur (CPU). Les mémoires peuvent être de type ROM (de l'anglais *Read Only Memory*) ou RAM (de l'anglais *Random Access Memory*) ou encore Flash. La passerelle (6) communique avec le réseau local (1) et le réseau Internet étendu (10) via le module Ethernet (ETH) d'une part et éventuellement le module WIFI pour une communication locale sans fils. La passerelle de service (6) comprend en outre, conformément à l'invention, un module de gestion du *streaming* adaptatif (HAS) apte à prendre en compte les informations contenues dans les fichiers de description (7) pour demander un téléchargement progressif de l'une des chaînes de contenus à l'une des qualités proposées dans le fichier de description. La passerelle selon l'invention comporte également un module PRM de gestion du téléchargement, capable de déterminer à un instant donné quelles sont les priorités à affecter aux chaînes à pré-acheminer vers le terminal client et à transformer ces priorités en requêtes adaptées pour le module HAS.

Ce module accède à un fichier de paramètres utilisateurs. Ces paramètres peuvent être par exemple les préférences de l'utilisateur selon les terminaux, les coefficients de pondération à utiliser en fonction des algorithmes de codage associés aux contenus, etc., ou tout moyen qui permette à la passerelle domestique de connaître les caractéristiques d'affichage (taille de l'écran, fenêtre) du contenu, par exemple une requête HTTP comportant de telles informations dans son en-tête (*header*), ou un message conforme à la norme UPnP IGD. On rappelle que UPnP, pour *Universal Plug and Play*, est un ensemble de protocoles de l'"UPnP forum" consacré à la découverte des équipements dans un réseau local ; dans cet ensemble de protocoles, UPnP IGD (pour : UPnP Internet Gateway Device) concerne plus spécifiquement les services de configuration d'un routeur réseau ou d'une passerelle de service. Un exemple de syntaxe possible pour une requête dans un tel format est proposé ci-dessous ; un client informe le routeur (la passerelle de service) de la taille d'écran (1920x1080 de la balise « DeviceScreenSize » surlignée en gras) associée à un équipement qui est en train de télécharger une vidéo à partir d'un serveur vidéo :

```
POST /upnp/b6f78646-53ff-3bee-a91c-
2b7ab958ec0a/WANCommonIFC1.ctl HTTP/1.1
Host: 192.168.1.1
User-Agent: STB IGD client
Content-Length: 409
Content-Type: text/xml
SOAPAction: "urn:schemas-upnp-
org:service:WANCommonInterfaceConfig:1#SetDeviceScreenSize"
Connection: Close
Cache-Control: no-cache
Pragma: no-cache

<?xml version="1.0"?>
<s:Envelope
xmlns:s="http://schemas.xmlsoap.org/soap/envelope/"
s:encodingStyle="http://schemas.xmlsoap.org/soap/encoding/">
<s:Body>
<u:SetDeviceScreenSize xmlns:u="urn:schemas-upnp-
org:service:WANCommonInterfaceConfig:1">
<StreamServerIp>10.194.12.1</StreamServerIp>
<StreamLeaseDuration>328203</StreamLeaseDuration>
<DeviceMacAddress>74:46:a0:ba:f3:1f</DeviceMacAddress>
<DeviceScreenSize>1920x1080</DeviceScreenSize>
</u:SetDeviceScreenSize>
</s:Body>
</s:Envelope>
```

Les fichiers de description (7) peuvent être enregistrés par exemple dans les mémoires M de la passerelle ou se trouver à l'extérieur.

La passerelle de service (6) selon l'invention peut aussi contenir d'autres modules comme un disque dur non représenté pour le stockage des fragments vidéo, un module de contrôle d'accès aux contenus, un module d'interface vidéo, d'autres modules lui permettant de communiquer avec l'extérieur via différents protocoles sur différents liens physiques, etc.

On notera que le terme *module* peut correspondre aussi bien à un composant logiciel qu'à un composant matériel ou un ensemble de composants matériels et logiciels, un composant logiciel correspondant lui-même à un ou plusieurs programmes ou sous-programmes d'ordinateur ou de manière plus générale à tout élément d'un programme apte à mettre en œuvre une fonction ou un ensemble de fonctions telles que décrites pour les modules concernés. De la même manière, un composant matériel correspond à tout élément d'un ensemble matériel (ou hardware) apte à mettre en œuvre une fonction ou un ensemble de fonctions pour le module concerné (circuit intégré, carte à puce, carte à mémoire, etc.).

La figure 3 représente un chronogramme des échanges selon un mode de réalisation de l'invention.

Dans cet exemple, un seul terminal est concerné par le téléchargement progressif.

On suppose que l'utilisateur du terminal (3) souhaite télécharger trois contenus C1, C2, C3 en provenance du serveur de contenus (2) et les visualiser sur les trois fenêtres A, B, C, du terminal (3) comme expliqué à l'appui de la figure 1.

Le module (4) de gestion des priorités est représenté comme une entité indépendante mais pourrait se trouver soit dans le terminal (3) soit dans la passerelle (6) soit encore ailleurs dans un autre terminal du le réseau local.

Les contenus sont téléchargés l'un après l'autre avec un débit initial qui peut être, selon deux exemples simples :

- Le débit correspondant au niveau le plus faible (N1) dans le fichier de description, par exemple 512kb/s pour les trois contenus ;

- Le débit maximum autorisé (par exemple, 4Mo) divisé par le nombre de contenus (3) à télécharger, ce qui correspond dans notre exemple au niveau N2 (1024 kb/s) pour chacun des trois contenus.

On suppose ici que la passerelle domestique (6) dispose des informations relatives aux contenus, notamment le fichier de description *manifest*(7) qui peut lui avoir été transmis par exemple par le serveur de contenus (2). Selon une variante, le fichier *manifest*(7) se trouve directement sur la passerelle domestique, ou sur un autre terminal du réseau local, etc.

Lors d'une étape E10, la passerelle récupère les trois contenus en téléchargement progressif sur le serveur de contenus (2). Ce téléchargement est symbolisé par la flèche dont la légende indique les contenus reçus et leur niveau : *C1@N1+C2@N1+C3@N1.*

Le terminal reçoit les contenus en provenance de la passerelle et affiche, lors d'une étape E1, les trois contenus selon leur résolution initiale.

Puis, lors d'une étape E2, une information concernant les fenêtres A, B et C (taille ou nombre de pixels couverts par la fenêtre, par exemple) est transmise au dispositif de gestion (4). Un exemple de telles informations peut prendre la forme d'un message M contenant par exemple une copie d'écran à partir de laquelle le dispositif de priorisation pourra déterminer la taille relative des fenêtres, ou une liste de chaînes à télécharger avec la taille de la fenêtre associée, dans cet exemple un message noté M(Ci@Si) contenant une liste de chaînes à télécharger avec la liste des tailles associées qui peut prendre la forme :

M= {C3@150x250, C2@25x75,...}.

Pour indiquer que la fenêtre C3 couvre une surface à l'écran de 150x250, la fenêtre C2 25x75 pixels, etc.

On notera qu'il est souhaitable que l'algorithme de priorisation, en particulier s'il se trouve sur la passerelle, reçoive comme paramètre d'entrée la taille de l'écran de chaque terminal en pixels ou en centimètres (hauteur x largeur). Cette acquisition peut se faire par exemple via une requête http (*request string*) de la forme :

*http://@IP_Passerelle:Port/mon_contenu_has.m3u8?url=@IPServeurHas:PortS          erveur-Has//mon_contenu_has.m3u8&hauteur=1080&largeur=1920*

Alternativement, des données utiles peuvent se trouver dans le champ « User Agent » de la requête http : type de smartphone, de tablette, etc.

Alternativement encore, la norme UPnP (IGD) peut être utilisée pour récupérer ce genre d'information, conformément à l'exemple fourni préalablement.

A l'étape E20, le dispositif de gestion (4) calcule la priorité à associer à chaque contenu : dans notre exemple, comme il a reçu une information d'occupation à l'écran du terminal, il utilise cette information pour en déduire une priorité $P_i$ pour chaque contenu $C_i$ qu'il transmet à la passerelle de service (6). Selon notre exemple, il peut affecter une priorité via un chiffre de 1 à 100 qui prendra la valeur 60 pour le contenu C1 à afficher dans la fenêtre A, 15 pour le contenu C2 et 25 pour le contenu C3. Un exemple de telles informations peut prendre la forme d'un message M'(Ci@Pi) contenant une liste de chaînes à télécharger avec la liste des priorités associées :

M'= {C2@15, C3@25, C1@60}...

Sur réception de ce message, lors de l'étape E11, Le dispositif de gestion HAS de la passerelle en charge du *streaming* adaptatif établit un ensemble de requêtes pour récupérer les contenus en tenant compte de leur priorité : le débit total disponible pour les téléchargements étant connu de la passerelle, elle va donc tenter d'affecter selon notre exemple 60% du débit au contenu C1, 15% à C2 et 25% à C3. Le dispositif de gestion HAS de la passerelle a pour rôle de choisir la meilleure qualité, c'est-à-dire la valeur inférieure ou égale de débit la plus proche dans le fichier de paramètres (*manifest*), puis de demander au serveur de contenus (2) un téléchargement des différentes chaînes de contenus au niveau approprié via un autre message vers le serveur de contenus noté M"(Ci@Nj) contenant une liste de chaînes à télécharger avec la liste des valeurs exactes des niveaux requis, choisies dans le fichier *manifest*(7).

Par exemple, si le débit total disponible (soit sur le réseau local, soit à l'entrée de la passerelle) est de 4Mo (4096ko), le dispositif de gestion HAS lit le fichier manifeste (7) et affecte en conséquence 2048kb (N3) à C1 (50%, soit la valeur immédiatement disponible en-dessous de 60%), 1024kb (N2) à C3 (25%), et 512kb (N1) à C2 (12,5%, soit la valeur immédiatement disponible en-dessous de 15%).

On notera que le calcul du débit pour chaque contenu peut également être effectué dans le dispositif (4) de gestion du téléchargement. Il suffit qu'il connaisse la valeur de débit total à partager entre les différents contenus, ce qui est typiquement le cas s'il se trouve sur la passerelle de service qui connaît le débit total disponible pour le téléchargement dans le réseau local, ou dans un terminal du réseau local qui connaît son débit total disponible de téléchargement progressif, ou dans tout autre serveur et/ou terminal auquel on aurait communiqué cette valeur.

Le téléchargement des données est symbolisé par la flèche pleine avec la légende *C1@N3+C2@N1+C3@N2.*

Les contenus sont délivrés en *streaming* par le serveur de contenus (2) à la passerelle de service qui les transmet au terminal (3) qui lui est connecté. Le terminal (3) procède lors d'une étape E3, similaire à l'étape E1, à la restitution des chaînes C1, C2, C3.

Si l'utilisateur modifie les tailles de fenêtres associées aux contenu, les étapes précédemment décrites (E2, E20, E11, E12 et E3) sont enchaînées de nouveau avec de nouvelles priorités associées aux mêmes chaînes ou à de nouvelles chaînes.

La figure 4 représente un organigramme de calcul pour un mode de réalisation de gestion du téléchargement progressif dans un réseau local selon l'invention.

On suppose que le dispositif de gestion HAS PRM (4), qui est situé dans cet exemple sur la passerelle domestique (6), dispose en entrée ou peut accéder sur requête à :

- l'identification des chaînes en cours de téléchargement (Ci) et du débit (Ri) associé (Ci@Ri),
- une liste des contenus et des fenêtres associées (DISP) dans lesquelles le ou les terminaux clients vont afficher les contenus, reçues par exemple dans le message (M) présenté à l'appui de la figure 3, et éventuellement des préférences utilisateur (PREF) (priorité d'un terminal par rapport à un autre, etc.)
- un fichier *manifest* (7) décrivant les différents contenus disponibles et les niveaux associés, conformément par exemple à l'annexe 1.

Au cours d'une première étape S1, le dispositif de gestion (PRM, HAS) calcule la bande passante totale disponible (BR(t)). Il peut en calculer une approximation acceptable en utilisant le débit courant sur le réseau et différentes données qu'il a mémorisées relativement aux téléchargements précédents. Par exemple :

- Si le dispositif se trouve sur la passerelle, il peut calculer BR(t) en fonction de la bande passante disponible en entrée de la passerelle à un instant t ; on considère ici que la passerelle a les moyens d'apprécier le débit réseau au temps t du calcul. C'est une variable non prévisible qui évolue au cours du temps.

- Si le dispositif se trouve sur le terminal ou sur la passerelle, il peut calculer BR(t) en fonction du débit déjà affecté aux contenus téléchargés, notamment des contenus Ci en cours de visualisation par l'utilisateur et du débit (Ri) qui leur est individuellement affecté, à laquelle vient s'ajouter une marge de sécurité. On peut appliquer par exemple la formule suivante :

$$BR(t) = (RC1(t)+MargeA) + (RC2(t)+MargeB) + (RC3(t)+MargeC)$$

où RCi(t) représente le débit instantané associé au contenu Ci en cours de téléchargement.

- En première approximation, ce débit peut être supposé constant. On peut supposer, au contraire, que ce débit de téléchargement est variable et réévalué régulièrement, par exemple toutes les 5 secondes, ou de manière cyclique. Dans cet exemple, le débit BR(t) peut être évalué de la manière suivante :

$$BR(t) = a \times BR(t\text{-}1) + (1 - a) \times DI(t)$$

où :

- DI(t) est le Débit Immédiat mesuré par le terminal ou la passerelle à l'instant t;
- BR(t-1) est le débit estimé à l'instant de mesure précédent (par exemple 5 secondes auparavant) ;
- a est une valeur comprise entre 0 et 1 ; si on souhaite favoriser BP(t-1) par rapport à DI(t) on prendra par exemple a = 0,6, sinon on peut prendre a = 0,4.

A l'initialisation de l'algorithme, le débit BR(0) (débit estimé au début du téléchargement) peut prendre par exemple la valeur du débit moyen de téléchargement lors de plusieurs téléchargements effectués précédemment, ou le débit immédiat mesuré en fin de téléchargement du dernier fichier, ou toute autre combinaison des temps de téléchargements mémorisés par le terminal au cours de ses précédents téléchargements.

Lors d'une étape S2, le dispositif calcule pour chaque terminal j qui souhaite obtenir un contenu en *streaming* un débit instantané de téléchargement (BRj(t)) à partir du débit total instantané de téléchargement (BR(t)) et d'une ou plusieurs données relatives au terminal : préférences utilisateur PREF (il peut favoriser sa tablette vis-à-vis de son PC, ou son TV vis-à-vis de son PC, etc.) ou caractéristiques du terminal (taille de l'écran, résolution, etc.) notées DISP. On notera que dans le cas où un seul terminal demande un téléchargement, le débit de téléchargement pour le terminal (BRj(t)) peut être égal au débit total de téléchargement pour le réseau local BR(t). Le débit BRj(t) peut s'exprimer simplement selon :

$$BRj(t) = [BR(t) * PRIO(j)] / SPr$$

où

- *PRIO(j)* est la priorité affectée à l'écran j (selon l'exemple de la figure 1, 4 pour le TV (3) et 1 pour la tablette (5)).
- *SPr* est la somme des priorités affectées aux différents terminaux qui effectuent des téléchargements.

Lors d'une étape S3, en fonction de certains paramètres reçus du terminal et de l'utilisateur, un nombre N de contenus à télécharger est calculée ou acquise. Dans notre exemple, on a une valeur de N=3 contenus à afficher. Cette variable peut être ajustée en fonction d'un certain nombre d'autres paramètres ou être fixe. Une fois que la valeur du paramètre N est choisie, une variable i est initialisée avec cette valeur N du nombre de chaînes à pré-acheminer puis sa valeur est testée lors d'une étape S4 dans le but d'exécuter les étapes suivantes pour l'ensemble des chaînes de contenus à télécharger.

Si la variable i n'est pas nulle au cours de l'étape S4, c'est-à-dire s'il reste encore des contenus à préparer pour le téléchargement, une étape S5 est effectuée au cours de laquelle le module PRM (4) effectue une lecture des données d'affichage (message M) et éventuellement des préférences utilisateurs relatives à la chaîne : taille de la fenêtre (S(Ci)), nombre de pixels occupés par la restitution du contenu, évolution de cette taille dans le temps, etc.

Un calcul de priorité est effectué au cours de l'étape S6. Cette priorité PRj(Ci) exprime pour chaque contenu Ci la priorité relative à son téléchargement. Selon un exemple simple, on peut affecter la priorité PRj(Ci) au contenu i pour le terminal j de manière à ce que l'ensemble des priorités soit égale à 100 (représentant la totalité de la taille de l'écran ou de l'ensemble des écrans si plusieurs terminaux effectuent un téléchargement). Alternativement, on peut calculer le nombre total de pixels (NbPixelsEcran) occupé à l'écran par les différentes fenêtres (A,B,C,D) associées aux différents contenus (C1, C2, C3,C4), puis évaluer la priorité selon :

$$PRj(Ci) = [(NBPixelsOccupésParCi) / (NBPixelsEcranj)]$$

où

- *NBPixelsOccupésParCi* est le nombre de pixels occupés par le contenu i sur l'écran j
- *NBPixelsEcranj* est le nombre de pixels total de l'écran j

Le calcul peut être de surcroît pondéré par le type de contenu et de chaîne sélectionné selon les préférences de l'utilisateur, le type de codage utilisé pour le contenu, etc. Si, par exemple, il est inscrit dans les préférences de l'utilisateur qu'il a une préférence pour les chaînes de sport, la chaîne C1, qui est de ce type, peut recevoir une pondération supplémentaire représentative de sa priorité plus élevée de sélection par l'utilisateur.

Une fois ce calcul de priorités effectué, il reste, lors d'une étape S7, à multiplier par exemple chacune d'entre elles par le débit calculé préalablement (BRj) pour le terminal j pour obtenir le débit effectivement souhaité pour le contenu i. Classiquement dans le contexte de HAS, le débit le plus proche inférieur sera choisi dans le fichier descriptif au cours d'une étape S8 : ainsi, si le calcul aboutit à 278kb/s et que les débits offerts dans le *manifest* sont respectivement 256, 312, 524 kb/s, le débit immédiatement en-dessous de 278 sera choisi, c'est-à-dire 256. Le débit max par contenu peut être calculé par exemple selon :

$$Rj(Ci) = PRj(Ci) * BRi(t) / 100$$
$$Rmax(Ci) >= (Rj(Ci) + Marge\_Ci)$$

Naturellement, toute variante à la portée de l'homme du métier est envisageable dans ce calcul : intervention d'autres paramètres, limitation du nombre de canaux pré-acheminés, priorité inscrite directement dans le *manifest,* etc.

Si tous les débits ont été calculés pour tous les contenus, c'est-à-dire si la variable i vaut zéro au cours d'une étape S4, alors le programme peut recommencer à l'étape S1 par la prise en compte de nouveaux paramètres externes (action de l'utilisateur sur les fenêtres, variation du débit total instantané BR(t), etc.) et un nouveau débit BRj(t) peut être calculé respectivement pour chaque terminal qui souhaite télécharger un ou plusieurs contenus.

Il va de soi que le mode de réalisation qui a été décrit ci-dessus a été donné à titre purement indicatif et nullement limitatif, et que de nombreuses modifications peuvent être facilement apportées par l'homme de l'art sans pour autant sortir du cadre de l'invention telle que revendiquée.

***Annexe1 : exemple de fichier manifest***

```
<?xml version="1.0"?>
<MPD xmlns:xsi="http://www.w3.org/2001/XMLSchema-instance"
  xmlns="urn:mpeg:DASH:schema:MPD:2011"
  xsi:schemaLocation="urn:mpeg:DASH:schema:MPD:2011 DASH-MPD.xsd"
  type="dynamic"   profiles="urn:mpeg:dash:profile:isoff-live:2011">
 <Representation id="0" codecs="avc1" mimeType="video/mp4"
width="1024" height="768" startWithSAP="1" bandwidth="46986">
<BaseURL>HTTP://server.com/</BaseURL>
<!-- Contenu C1 à N1=512kb -->
<SegmentBase>
    <Initialization sourceURL="C1_15sec_512kb/C1_512kbit_dash.mp4"/>
</SegmentBase>
<SegmentList duration="10">
    <SegmentURL media="C1_512kb_1.mp4"/>
    <SegmentURL media=" C1_512kb _2.mp4"/> ....
</SegmentList>
<!-- Contenu C1 à N2=1024kb -->
<SegmentBase>
    <Initialization sourceURL="C1_15sec_500kbit/C1_1024kbit_dash.mp4"/>
</SegmentBase>
<SegmentList duration="10">
    <SegmentURL media="C1_512kb_1.mp4"/>....
</SegmentList>
<!-- Contenu C1 à N3=2048kb -->
<SegmentBase>
    <Initialization sourceURL="C1_15sec_512kb /C1_2048kbit_dash.mp4"/>
</SegmentBase>
<SegmentList duration="10">
    <SegmentURL media="C1_2048kb _1.mp4"/>...
</SegmentList>
<!-- Contenu C2 à N1=512kb -->
<SegmentBase>
    <Initialization sourceURL=" C2_15sec_500kbit/C2_512kbit_dash.mp4"/>
</SegmentBase>
<SegmentList duration="10">
    <SegmentURL media=" C2_512kb_1.mp4"/> ....
</SegmentList>
<!-- Contenu C2 à N2=1024kb -->
<SegmentBase>
    <Initialization sourceURL="C2_15sec_500kbit/C1_1024kbit_dash.mp4"/>
</SegmentBase>
<SegmentList duration="10">
    <SegmentURL media="C2_1024kb_1.mp4"/>....
</SegmentList>
<!-- Contenu C2 à N3=2048kb -->
<SegmentBase>
    <Initialization sourceURL="C2_15sec_500kbit/C1_2048kbit_dash.mp4"/>
</SegmentBase>
<SegmentList duration="10">
    <SegmentURL media="C1_2048kbit _1.mp4"/>...
</SegmentList>
    ....
</SegmentList>
</MPD>
```

**EP 2 947 888 B1**

**Revendications**

1. Procédé de gestion dans un réseau local du téléchargement progressif adaptatif (HAS) de contenus numériques par au moins un terminal (3, 5) apte à recevoir au moins un contenu numérique (C1...CN) à restituer sur un écran, le procédé étant **caractérisé en ce qu'**il comporte les étapes suivantes :

   - obtention (S2) d'un débit instantané de téléchargement (BRj(t)) pour ledit au moins un terminal (j) ;

   - obtention (S6) d'une priorité (PRj(Ci)) pour chaque contenu à restituer sur le terminal en fonction d'une donnée (A, B, C) relative à un taux d'occupation de la surface de l'écran par la restitution du contenu sur le terminal ;

   - demande de téléchargement (S9) de chaque contenu (C1, C2, C3) selon un niveau de qualité (N1, N2, N3) dépendant de la priorité (PRj(Ci)) obtenue pour ledit contenu.

2. Procédé de gestion selon la revendication 1, **caractérisée en ce que** l'étape d'obtention (S2) d'un débit instantané de téléchargement (BRj(t)) pour ledit au moins un terminal (j) est précédée des étapes de :

   - obtention (S1) d'un débit total instantané de téléchargement (BR(t)) à partager entre les terminaux du réseau local ;
   - réception d'une donnée (DISP, PREF) relative à au moins un terminal (3,5) ;
   - obtention (S2) du débit instantané de téléchargement (BRj(t)) pour ledit au moins un terminal (j) à partir du débit total instantané de téléchargement (BR(t)) et de la donnée reçue (DISP, PREF).

3. Procédé de gestion selon la revendication 2, **caractérisée en ce que** la priorité (PRj(Ci)) pour chaque contenu à restituer sur le terminal dépend en outre des préférences d'un utilisateur ;

4. Procédé de gestion selon la revendication 1, **caractérisé en ce que** la donnée (A, B, C, D) relative à l'occupation à l'écran de la restitution du contenu sur ledit terminal est relative au nombre de pixels occupés à l'écran par la restitution.

5. Procédé de gestion selon la revendication 1, **caractérisé en ce que** le niveau (Nji) de restitution d'un contenu (Ci) est choisi dans un fichier de description du contenu selon les étapes suivantes :

   - obtention (S7) d'un débit (Rji) à associer au contenu (Ci) en fonction du débit instantané de téléchargement (BRj(t)) et de la priorité (PRj(Ci)) obtenue ;
   - détermination (S8) d'un niveau de qualité (Nji) à télécharger comme étant le niveau immédiatement inférieur à celui du débit (Rji) à associer au contenu (Ci) ;

6. Procédé de gestion selon la revendication 1, **caractérisé en ce qu'**il comporte une étape préliminaire de réception et restitution de chaque contenu au niveau le plus bas du fichier de description.

7. Procédé de gestion selon la revendication 1, **caractérisé en ce que** l'obtention du débit total instantané de téléchargement (BR(t)) est effectuée à partir des débits des différents contenus téléchargés.

8. Procédé de gestion selon la revendication 1, **caractérisé en ce que** l'obtention de la priorité (PRj(Ci)) pour chaque contenu à restituer prend en compte la méthode d'encodage (H.264, H.265) du contenu.

9. Dispositif (PRM, 4) de gestion dans un réseau local du téléchargement progressif adaptatif (HAS) de contenus numériques par au moins un terminal (3, 5) apte à recevoir au moins un contenu numérique (C1...CN) à restituer sur un écran, le dispositif étant **caractérisé en ce qu'**il comporte :

   - un module d'obtention (S2) d'un débit total de téléchargement (BRj(t)) pour ledit terminal (j) ;
   - un module d'obtention (S6) d'une priorité (PRj(Ci)) pour chaque contenu à restituer en fonction d'une donnée (A, B, C) relative à un taux d'occupation de la surface de l'écran par la restitution du contenu sur le terminal ;
   - un module de téléchargement (S9) de chaque contenu (C1, C2, C3) selon un niveau de qualité (N1, N2, N3) dépendant de la priorité (PRj(Ci)) obtenue pour ledit contenu.

**10.** Passerelle de service (6) comportant un dispositif (PRM) de gestion du téléchargement progressif adaptatif (HAS) de contenus numériques selon la revendication 9.

**11.** Terminal (6) comportant un dispositif (PRM) de gestion du téléchargement progressif adaptatif (HAS) de contenus numériques selon la revendication 9.

**12.** Programme d'ordinateur pour une passerelle domestique (6) comprenant les instructions logicielles pour commander la mise en œuvre par ladite passerelle des étapes du procédé de gestion du changement de chaînes selon la revendication 1 lorsque le programme est exécuté par la passerelle.


**Patentansprüche**

**1.** Verfahren zur Verwaltung, in einem lokalen Netzwerk, des adaptiven progressiven Fernladens (HAS) digitaler Inhalte durch mindestens ein Endgerät (3, 5), das geeignet ist, mindestens einen digitalen Inhalt (C1...CN) zu empfangen, der auf einem Bildschirm wiederzugeben ist, wobei das Verfahren **dadurch gekennzeichnet ist, dass** es die folgenden Schritte aufweist:

- Erhalten (S2) eines augenblicklichen Fernladedurchsatzes (BRj(t)) für das mindestens eine Endgerät (j);
- Erhalten (S6) einer Priorität (PRj(Ci)) für jeden Inhalt, der auf dem Endgerät wiederzugeben ist, in Abhängigkeit von einem Datenelement (A, B, C) bezogen auf eine Belegungsrate der Fläche des Bildschirms durch die Wiedergabe des Inhalts auf dem Endgerät;
- Anfordern des Fernladens (S9) jedes Inhalts (C1, C2, C3) gemäß einem Qualitätsniveau (N1, N2, N3), das von der Priorität (PRj(Ci)) abhängt, die für den Inhalt erhalten wird.

**2.** Verwaltungsverfahren nach Anspruch 1, **dadurch gekennzeichnet, dass** dem Schritt des Erhaltens (S2) eines augenblicklichen Fernladedurchsatzes (BRj(t)) für das mindestens eine Endgerät (j) die folgenden Schritte vorangehen:

- Erhalten (S1) eines augenblicklichen Gesamt-Fernladedurchsatzes (BR(t)), der zwischen den Endgeräten des lokalen Netzwerks zu teilen sind;
- Empfangen eines Datenelements (DISP, PREF) bezogen auf mindestens ein Endgerät (3, 5);
- Erhalten (S2) des augenblicklichen Fernladedurchsatzes (BRj(t)) für das mindestens eine Endgerät (j) ausgehend vom augenblicklichen Gesamt-Fernladedurchsatz (BR(t)) und dem empfangenen Datenelement (DISP, PREF).

**3.** Verwaltungsverfahren nach Anspruch 2, **dadurch gekennzeichnet, dass** die Priorität (PRj(Ci)) für jeden Inhalt, der auf dem Endgerät wiederzugeben ist, ferner von den Einstellungen eines Benutzers abhängt.

**4.** Verwaltungsverfahren nach Anspruch 1, **dadurch gekennzeichnet, dass** das Datenelement (A, B, C, D) bezogen auf die Bildschirmbelegung der Wiedergabe des Inhalts auf dem Endgerät auf die Anzahl von Pixeln bezogen ist, die durch die Wiedergabe auf dem Bildschirm belegt sind.

**5.** Verwaltungsverfahren nach Anspruch 1, **dadurch gekennzeichnet, dass** das Wiedergabeniveau (Nji) eines Inhalts (Ci) aus einer Beschreibungsdatei des Inhalts gemäß den folgenden Schritten ausgewählt wird:

- Erhalten (S7) eines Durchsatzes (Rji), der dem Inhalt (Ci) in Abhängigkeit von dem augenblicklichen Fernladedurchsatz (BRj(t)) und der erhaltenen Priorität (PRj(Ci)) zuzuordnen ist;
- Bestimmen (S8), dass ein fernzuladendes Qualitätsniveau (Nji) das Niveau unmittelbar unter jenem des Durchsatzes (Rji) ist, der dem Inhalt (Ci) zuzuordnen ist.

**6.** Verwaltungsverfahren nach Anspruch 1, **dadurch gekennzeichnet, dass** es einen vorausgehenden Schritt des Empfangens und Wiedergebens jedes Inhalts auf dem niedrigsten Niveau der Beschreibungsdatei aufweist.

**7.** Verwaltungsverfahren nach Anspruch 1, **dadurch gekennzeichnet, dass** das Erhalten des augenblicklichen Gesamt-Fernladedurchsatzes (BR(t)) ausgehend von den Durchsätzen der verschiedenen ferngeladenen Inhalte durchgeführt wird.

8. Verwaltungsverfahren nach Anspruch 1, **dadurch gekennzeichnet, dass** das Erhalten der Priorität (PRj(Ci)) für jeden wiederzugebenden Inhalt das Verfahren zur Codierung (H.264, H.265) des Inhalts berücksichtigt.

9. Vorrichtung (PRM, 4) zur Verwaltung, in einem lokalen Netzwerk, des adaptiven progressiven Fernladens (HAS) digitaler Inhalte durch mindestens ein Endgerät (3, 5), das geeignet ist, mindestens einen digitalen Inhalt (C1...CN) zu empfangen, der auf einem Bildschirm wiederzugeben ist, wobei die Vorrichtung **dadurch gekennzeichnet ist, dass** sie Folgendes aufweist:

- ein Modul zum Erhalten (S2) eines Gesamt-Fernladedurchsatzes (BRj(t)) für das Endgerät (j);
- ein Modul zum Erhalten (S6) einer Priorität (PRj(Ci)) für jeden Inhalt, der auf dem Endgerät wiederzugeben ist, in Abhängigkeit von einem Datenelement (A, B, C) bezogen auf eine Belegungsrate der Fläche des Bildschirms durch die Wiedergabe des Inhalts auf dem Endgerät;
- ein Modul zum Fernladen (S9) jedes Inhalts (C1, C2, C3) gemäß einem Qualitätsniveau (N1, N2, N3), das von der Priorität (PRj(Ci)) abhängt, die für den Inhalt erhalten wird.

10. Dienst-Gateway (6) aufweisend eine Vorrichtung (PRM) zur Verwaltung des adaptiven progressiven Fernladens (HAS) digitaler Inhalte nach Anspruch 9.

11. Endgerät (6) aufweisend eine Vorrichtung (PRM) zur Verwaltung des adaptiven progressiven Fernladens (HAS) digitaler Inhalte nach Anspruch 9.

12. Computerprogramm für einen Heimgateway (6) umfassend die Softwareanweisungen, um die Durchführung, von dem Gateway, der Schritte des Verfahrens zur Verwaltung des Wechselns von Kanälen nach Anspruch 1 zu steuern, wenn das Programm von dem Gateway ausgeführt wird.

## Claims

1. Method for managing, in a local network, adaptive streaming (HAS) of digital contents by at least one terminal (3, 5) able to receive at least one digital content (C1...CN) to be rendered on a screen, the method being **characterized in that** it comprises the following steps:

- obtaining (S2) an instantaneous streaming bit rate (BRj(t)) for said at least one terminal (j);

- obtaining (S6) a priority (PRj(Ci)) for each content to be rendered on the terminal depending on a datum (A, B, C) relating to a degree of occupancy of the area of the screen by the rendition of the content on the terminal;

- requesting (S9) each content (C1, C2, C3) to be streamed with a quality level (N1, N2, N3) dependent on the priority (PRj(Ci)) obtained for said content.

2. Managing method according to Claim 1, **characterized in that** the step (S2) of obtaining an instantaneous streaming bit rate (BRj(t)) for said at least one terminal (j) is preceded by steps of:

- obtaining (S1) a total instantaneous streaming bit rate (BR(t)) to be shared between the terminals of the local network;
- receiving a datum (DISP, PREF) relating to at least one terminal (3, 5);
- obtaining (S2) the instantaneous streaming bit rate (BRj(t)) for said at least one terminal (j) on the basis of the total instantaneous streaming bit rate (BR(t)) and of the received datum (DISP, PREF).

3. Managing method according to Claim 2, **characterized in that** the priority (PRj(Ci)) for each content to be rendered on the terminal furthermore depends on the preferences of a user.

4. Managing method according to Claim 1, **characterized in that** the datum (A, B, C, D) relating to the occupancy on the screen of the rendition of the content on said terminal relates to the number of pixels occupied on the screen by the rendition.

5. Managing method according to Claim 1, **characterized in that** the rendering level (Nji) of a content (Ci) is chosen from a manifest of the content via the following steps:

- obtaining (S7) a bit rate (Rji) to be associated with the content (Ci) depending on the instantaneous streaming bit rate (BRj(t)) and on the obtained priority (PRj(Ci));
- determining (SA) a quality level (Nji) to be streamed as being the level immediately below that of the bit rate (Rji) to be associated with the content (Ci).

6. Managing method according to Claim 1, **characterized in that** it comprises a preliminary step of receiving and rendering each content at the lowest level of the manifest.

7. Managing method according to Claim 1, **characterized in that** the total instantaneous streaming bit rate (BR(t)) is obtained on the basis of the bit rates of the various streamed contents.

8. Managing method according to Claim 1, **characterized in that** the obtainment of the priority (PRj(Ci)) for each content to be rendered takes into account the encoding method (H.264, H.265) of the content.

9. Device (PRM, 4) for managing, in a local network, adaptive streaming (HAS) of digital contents by at least one terminal (3, 5) able to receive at least one digital content (C1...CN) to be rendered on a screen, the device being **characterized in that** it comprises:

- a module for obtaining (S2) a total streaming bit rate (BRj(t)) for said terminal (j);

- a module for obtaining (S6) a priority (PRj(Ci)) for each content to be rendered depending on a datum (A, B, C) relating to a degree of occupancy of the area of the screen by the rendition of the content on the terminal;

- a module for streaming (S9) each content (C1, C2, C3) with a quality level (N1, N2, N3) dependent on the priority (PRj(Ci)) obtained for said content.

10. Service gateway (6) comprising a device (PRM) for managing adaptive streaming (HAS) of digital contents according to Claim 9.

11. Terminal (6) comprising a device (PRM) for managing adaptive streaming (HAS) of digital contents according to Claim 9.

12. Computer program for a residential gateway (6) comprising software instructions for commanding the implementation, by said gateway, of the steps of the method for managing the change of stations according to Claim 1 when the program is executed by the gateway.

EP 2 947 888 B1

FIGURE 1

FIGURE 2

C1@N1+C2@N1+C3@N1

E2 M
(Ci@Si)

E20 M'
(Ci@Pi)

E11 M"
(Ci@Ri)

C1@N3+C2@N1+C3@N2

**FIGURE 3**

Ci@Ri

E20

BR(t) — S1

BRj(t) — S2

DISP

PREF

N ; i=N — S3

i=0 ? — S4

M(Ci@Si)

Sj(Ci) — S5

PRj(Ci) — S6

Rji = f(PRj(Ci)) — S7

7

Nji — S8

i-- — S9

**FIGURE 4**

**EP 2 947 888 B1**

## RÉFÉRENCES CITÉES DANS LA DESCRIPTION

**Documents brevets cités dans la description**

- US 20070024705 A